# FASCICULE DE BREVET EUROPEEN

(11) **EP 0 932 236 B1**
(45) Date de publication et mention de la délivrance du brevet: **11.03.2009**
(21) Numéro de dépôt: 99400154.3
(22) Date de dépôt: 22.01.1999
(51) Int. Cl.: H02H 7/16

(54) **Dispositif de réserve d'énergie en courant électrique continu**
Vorrichtung für Gleichstrom-Energiespeichereinrichtung
DC current energy storing device

(30) Priorité: 27.01.1998 FR 9800851
(43) Date de publication de la demande: 28.07.1999
(73) Titulaire: THALES AVIONICS S.A., 78141 Vélizy Villacoublay Cédex (FR)
(72) Inventeur: Bedouet, Bernard, Thomson-CSP P.I.D.B., 94117 Arcueil Cedex (FR)
(74) Mandataire: Beylot, Jacques

(56) Documents cités:
- EP-A- 0 341 159
- WO-A-92/20082
- PATENT ABSTRACTS OF JAPAN vol. 018, no. 595 (E-1630), 14 novembre 1994 & JP 06 225447 A (SHIZUKI DENKI SEISAKUSHO:KK), 12 août 1994
- DATABASE WPI Section EI, Week 8937 Derwent Publications Ltd., London, GB; Class X13, AN 89-269282 XP002078745 & SU 1 465 930 A (PODOLSKII V L) , 15 mars 1989

## Description

La présente invention est relative à un dispositif de réserve d'énergie en courant électrique continu, à base de condensateurs, permettant de masquer les brèves coupures d'un réseau d'alimentation en énergie électrique continue pour des modules électroniques.

Une des applications possibles d'un dispositif de réserve d'énergie en courant électrique continu est l'alimentation en courant électrique continu d'équipements embarqués à bord d'aéronef. Les réseaux d'alimentation en courant électrique continu, à bord des aéronefs sont sujets à des coupures de quelques microsecondes à quelques dizaines de millisecondes, provoquées par la mise en route de gros consommateurs de courant tels que des moteurs électriques ou par un transfert de source d'alimentation à l'aide de dispositifs de commutation électromécaniques. Elles peuvent être préjudiciables au bon fonctionnement d'équipements électroniques si elles parviennent jusqu'à eux. Pour éviter cela, il est habituel de placer immédiatement en amont des équipements électroniques, des dispositifs de réserve d'énergie à condensateurs électrochimiques qui prennent le relais du réseau d'alimentation pendant les microcoupures.

Ces dispositifs de réserve d'énergie posent des problèmes de fiabilité en raison des défaillances possibles de leurs condensateurs électrochimiques qui peuvent se mettre en court-circuit ou en circuit ouvert. La panne par mise en court-circuit d'un condensateur électrochimique d'un dispositif de réserve d'énergie est facile à détecter car elle provoque la perte de disponibilité des équipements électroniques alimentés. Sa probabilité est de l'ordre 0,5 10⁻⁶ par condensateur. La panne par passage en circuit ouvert d'un condensateur électrochimique d'un dispositif de réserve d'énergie est plus sournoise car elle ne se manifeste que par une dégradation du temps de masquage des coupures. Sa probabilité est aussi de l'ordre de 0,5 10⁻⁶ par condensateur.

Un dispositif selon l'état de la technique est connu du document EP-A-0 341 159.

La présente invention a pour but de rendre un dispositif de réserve d'énergie en courant électrique continu tolérant aux pannes de ses condensateurs et d'éviter que la mise en court-circuit de l'un de ses condensateurs n'entraîne l'indisponibilité des équipements électroniques placés en aval. Elle a également pour but de faciliter la détection des pannes de type court-circuit ou circuit ouvert pouvant affecter les condensateurs d'un dispositif de réserve d'énergie pour signaler au plus tôt le condensateur défaillant en vue de son remplacement.

Elle a pour objet un dispositif de réserve d'énergie en courant électrique continu intercalé entre au moins une source de courant électrique continu et une charge et pourvu d'une batterie de condensateurs connectés en parallèle, comportant des moyens de limitation de courant disposés en série à son entrée et des moyens de coupure de courant qui sont disposés en série avec chaque condensateur et qui s'ouvrent pour une intensité de courant supérieure à l'intensité du courant nominal de charge du condensateur protégé imposée par la répartition entre les condensateurs du courant à intensité limitée par les moyens de limitation de courant délivré par la source de courant électrique continu à chaque mise en route.

Avantageusement, les moyens de coupure de courant placés en série avec chaque condensateur du dispositif de réserve d'énergie sont pourvus chacun d'un circuit de signalisation de leur état ouvert ou fermé.

Avantageusement, le dispositif de réserve d'énergie en courant électrique continu comporte des moyens de test de l'intensité du courant électrique disposés en série avec chaque condensateur et des moyens de contrôle s'assurant que les moyens de test détectent un courant à chaque mise en route de la source de courant électrique continu.

Avantageusement, les moyens de test de l'intensité du courant traversant chaque condensateur du dispositif de réserve d'énergie en courant électrique continu et les circuits de signalisation des états des moyens de coupure disposés en série avec chaque condensateur du dispositif de réserve d'énergie en courant électrique continu sont raccordés aux entrées d'une centrale de maintenance qui mémorise leurs états à chaque mise en route de la source de courant électrique continu.

Selon un mode particulier de réalisation, les moyens de coupure de courant placés en série avec chaque condensateur du dispositif de réserve d'énergie sont des fusibles.

Selon un autre mode particulier de réalisation, les moyens de coupure de courant placés en série avec chaque condensateur du dispositif de réserve d'énergie sont des disjoncteurs.

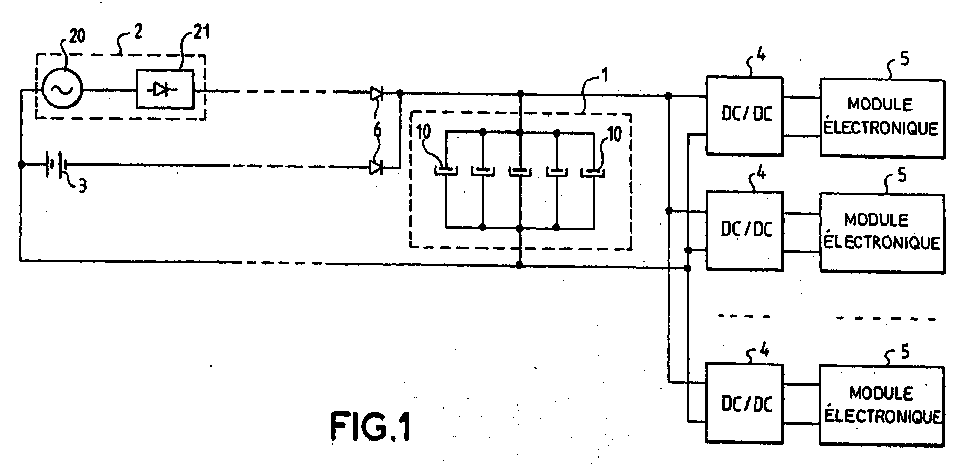

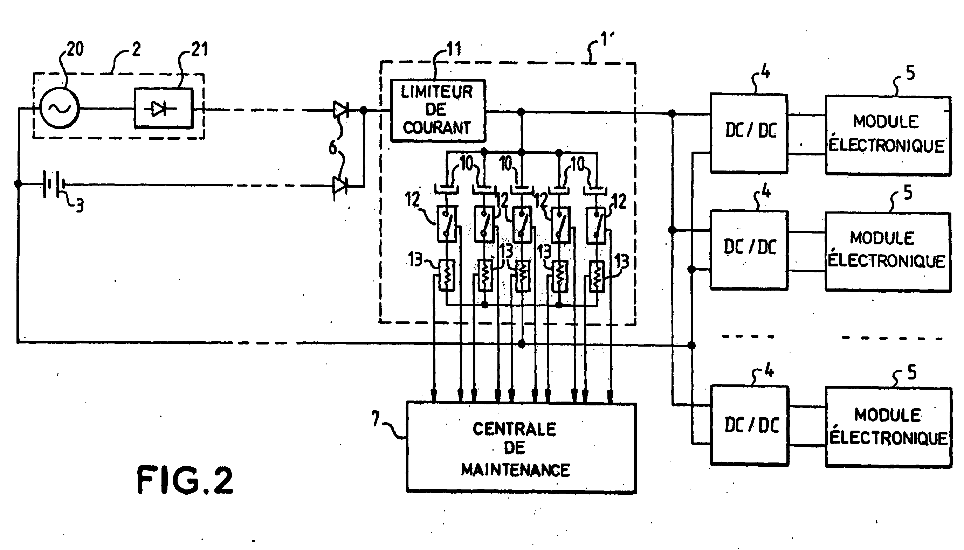

Les caractéristiques et avantages de l'invention ressortiront ci-après de la description d'un mode de réalisation donné à titre d'exemple. Cette description sera faite en regard du dessin dans lequel :
- une figure 1 représente un schéma de dispositif de réserve d'énergie en courant électrique continu selon la technique connue, intercalé entre des sources de courant électrique continu et des charges constituées de convertisseurs de tension électrique continu-continu alimentant des modules électroniques, et
- une figure 2 représente un schéma d'un dispositif de réserve d'énergie électrique selon l'invention, intercalé comme le précédent entre des sources de courant électrique continu et des charges constituées de convertisseur de tension électrique continu-continu alimentant des modules électroniques.

Dans ces figures les éléments identiques sont repérés par la même indexation.

On distingue sur la figure 1 un dispositif de réserve d'énergie en courant électrique continu classique 1 intercalé, entre d'une part, un double réseau de distribution d'énergie électrique alimenté par deux sources d'énergie électrique continue 2, 3 connectées en parallèle et, d'autre part, des convertisseurs de tension électrique continu-continu 4 chargés par des modules électroniques 5.

Le dispositif de réserve d'énergie électrique continu 1 est simplement constitué, comme cela est bien connu, d'une batterie de condensateurs électrochimiques 10 connectés en parallèle entre les deux pôles du double réseau de distribution d'énergie électrique continue. On distingue ici cinq condensateurs électrochimiques 10 en parallèle, par exemple quatre assurant la valeur nominale du temps de microcoupure à masquer et un cinquième redondant. Dans la pratique, on prévoit de connecter n condensateurs électrochimiques en parallèle pour obtenir la valeur nominale exigée par le temps de masquage de microcoupure désiré et un ou plusieurs condensateurs électrochimiques supplémentaires pour assurer la redondance en cas de panne par passage en circuit ouvert d'un ou plusieurs condensateurs.

Les deux sources d'énergie électrique continue 2 et 3 sont par exemple un générateur de courant électrique alternatif 20 suivi d'un circuit de redressement de courant 21 et une batterie d'accumulateurs de secours 3 dont les sorties sont raccordées à l'entrée du dispositif de réserve d'énergie en courant électrique continu par l'intermédiaire d'un double réseau de distribution d'énergie électrique et d'un aiguillage à diodes antiretour 6 qui empêche le dispositif de réserve d'énergie en courant électrique continu de réalimenter le double réseau de distribution d'énergie électrique.

Le dispositif de réserve d'énergie continue 1 est placé avec les convertisseurs de tension électrique continu-continu 4 au plus près des modules électroniques alimentés 5, par exemple dans la baie de logement de ces modules électroniques alors que les sources d'énergie électrique continue 2 et 3 sont distantes et reliées par l'intermédiaire du double réseau de distribution d'énergie électrique continue. La présence de dispositif de réserve d'énergie continue 1 à proximité des modules électroniques 5 se justifie par l'existence de microcoupures sur le réseau de distribution. Celles-ci sont dues soit aux démarrages de charges grosses consommatrices de courant connectées au double réseau de distribution d'énergie électrique comme des moteurs électriques, soit à des commutations mécaniques au niveau des sources d'énergie électrique continue assurant l'alimentation du double réseau de distribution d'énergie électrique.

La présence des condensateurs électrochimiques 10 dans le dispositif de réserve d'énergie en courant continu pose le problème de leur fiabilité. En effet, ceux-ci peuvent être sujets à des pannes qui se manifestent soit par une mise en court-circuit, soit par une mise en circuit ouvert.

La défaillance d'un condensateur du dispositif de réserve d'énergie en courant continu passant en court-circuit est à la fois facilement détectable et rédhibitoire puisqu'elle provoque la cessation de l'alimentation en courant électrique continu des modules électroniques 5. Elle se produit avec une probabilité de 0,5 10⁻⁶ environ par condensateur.

La défaillance d'un condensateur du dispositif de réserve d'énergie en courant électrique continu passant en circuit ouvert est plus difficilement détectable puisqu'elle ne se manifeste que par une dégradation du temps de masquage des microcoupures. Elle se produit aussi avec une probabilité de 0,5 10⁻⁶ environ par condensateur. Il est habituel de se prémunir contre des conséquences d'une telle panne sur l'alimentation des modules électroniques 5 en prévoyant d'équiper la batterie de condensateurs d'un ou plusieurs éléments redondants.

Il n'est pas satisfaisant qu'une défaillance d'un condensateur du dispositif de réserve d'énergie en courant électrique continu puisse soit provoquer l'arrêt inopiné de l'alimentation électrique de modules électroniques, soit passer inaperçue tout en provoquant une dégradation des performances susceptible d'entraîner des pannes intermittentes de modules électroniques. Pour éviter cela, on propose de modifier la structure du dispositif de réserve d'énergie en courant électrique continu conformément à la figure 2. Ce dernier, indexé par le chiffre 1', reçoit en plus de la batterie de condensateurs 10, un limiteur de courant 11 intercalé à son entrée ainsi qu'un montage en série aux bornes de chaque condensateur 10 d'un coupe-circuit à signalisation 12 et d'un circuit de mesure de courant 13 dont les sorties de signalisation sont connectées à une centrale de maintenance 7.

Le limiteur de courant 11 n'est pas nécessairement placé directement à l'entrée du dispositif de réserve d'énergie en courant électrique continu. Il peut être mis beaucoup plus en amont dans le réseau de distribution d'énergie électrique. ll peut par exemple être dédoublé et placé au niveau des sorties de chaque sources d'alimentation 2, 3. ll a pour fonction d'imposer, à chaque mise en service des sources d'alimentation 2 ou 3, une limitation des intensités des courants de charge des condensateurs 10 du dispositif de réserve d'énergie en courant électrique continu afin que ces dernières soient toujours inférieures à celles des courants de court-circuit au niveau de l'un quelconque des condensateurs. En effet, en cas de court-circuit dans l'un des condensateurs 10, il circule au niveau du condensateur court-circuité une surintensité de courant due à l'addition du courant de la source alimentant le réseau de distribution et des courants de décharge des autres condensateurs sains. Grâce à ce limiteur 11, il est alors possible de régler les coupe-circuit 12 pour une ouverture sur une intensité de courant supérieure à celles de charge et décharge de chaque condensateur 10 en fonctionnement normal et inférieure à l'intensité du courant de court-circuit.

Les coupe-circuit 12, qui peuvent être des fusibles à signalisation ou des disjoncteurs électromécaniques ou électroniques à signalisation, s'ouvrent sur un courant de court-circuit et restent ouvert jusqu'à l'intervention du personnel de maintenance.

Les circuits de mesure de courant 13 mesurent l'intensité du courant instantané traversant chaque condensateur et dirigent leurs mesures sur la centrale de maintenance 7. Celle-ci, qui peut comporter en entrées un circuit mémoire, teste périodiquement les états des signalisation des coupe-circuit 12 pour signaler tout condensateur 10 en état de court-circuit et vérifie qu'aucun condensateur n'est à l'état ouvert en testant, à partir des signaux des circuits de mesure de courant 13, la présence de courants non nuls aux bornes de chaque condensateur à chaque mise en route du réseau d'alimentation en courant électrique continu.

L'intérêt du dispositif de réserve d'énergie en courant continu sécurisé qui vient d'être décrit apparaît clairement à l'étude des probabilités de perte d'alimentation en amont des convertisseurs de tension électrique continu-continu des modules électroniques.

Avec un dispositif de réserve d'énergie en courant électrique continu non sécurisé de la technique antérieure comportant une batterie de dix condensateurs électrochimiques connectés en parallèle, alimenté par un double réseau de distribution d'énergie électrique continue, on peut estimer la probabilité de perte des deux réseaux de distribution à environ 10⁻¹⁰, celle de perte du dispositif de réserve à environ 10⁻⁵, de sorte que la probabilité de panne d'alimentation est supérieure à 10⁻⁵.

Avec le même dispositif de réserve d'énergie en courant électrique continu sécurisé par mise en oeuvre d'un limiteur de courant, de coupe-circuit et d'un onzième condensateur électrochimique, la probabilité de panne du double réseau de distribution d'énergie électrique continue reste de l'ordre de 10⁻¹⁰ tandis que celle du dispositif de réserve d'énergie en courant électrique continu passe à environ 10⁻¹⁰ ce qui conduit à une probabilité de panne d'alimentation de l'ordre de 2.10⁻¹⁰ qui est nettement inférieure au cas précédent.

## Revendications

1. Dispositif de réserve d'énergie en courant électrique continu (1') intercalé entre au moins une source de courant électrique continu (2, 3) et une charge (4, 5) et pourvu d'une batterie de condensateurs (10) connectés en parallèle, **caractérisé en ce qu'**il comporte des moyens de limitation de courant (11) disposés en série à son entrée et des moyens de coupure de courant (12) qui sont disposés en série avec chaque condensateur (10) et qui s'ouvrent pour une intensité de courant supérieure à l'intensité du courant nominal de charge du condensateur protégé (10) imposée par la répartition entre les condensateurs (10) du courant à intensité limitée par les moyens de limitation de courant (11) délivré par la source de courant électrique continu (2, 3) à chaque mise en route.

2. Dispositif selon la revendication 1, **caractérisé en ce que** lesdits moyens de coupure de courant (12) placés en série avec chaque condensateur (10) du dispositif de réserve d'énergie (1') sont pourvus chacun d'un circuit de signalisation de leur état ouvert ou fermé.

3. Dispositif selon la revendication 1, **caractérisé en ce qu'**il comporte en outre des moyens de test de l'intensité du courant électrique (13) disposés en série avec chaque condensateur (10) et des moyens de contrôle (7) s'assurant que les moyens de test (13) détectent un courant à chaque mise en route de la source de courant électrique continu (2, 3).

4. Dispositif selon la revendication 1, **caractérisé en ce que** les moyens de coupure de courant (12) placés en série avec chaque condensateur (10) du dispositif de réserve d'énergie (1') sont des fusibles.

5. Dispositif selon la revendication 1, **caractérisé en ce que** les moyens de coupure de courant (12) placés en série avec chaque condensateur (10) du dispositif de réserve d'énergie (1') sont des disjoncteurs.

## Claims

1. DC power reserve device (1') interposed between at least one DC source (2,3) and a load (4,5) and provided with a battery of parallel-connected capacitors (10), **characterized in that** it comprises current limitation means (11) series-connected at its input and current cut-off means (12) that are series-connected with each capacitor (10) and that open for a current intensity value higher than the value of intensity of the nominal charging current of the protected capacitor (10) that is imposed by the distribution between the capacitors (10) of the current, the intensity of which is limited by the means (11) of limiting current delivered by the DC source (2,3) each time that the system is started up.

2. Device according to Claim 1, **characterized in that** said current cut-off means (12) series-connected with each capacitor (10) of the power reserve device (1') are each provided with a circuit to signal their open or closed state.

3. Device according to Claim 1, **characterized in that** it further comprises means to test the intensity of the electrical current (13), these means being series-connected with each capacitor (10), and control means (7) to ensure that the testing means (13) detect a current whenever the DC source (2,3) is started up.

4. Device according to Claim 1, **characterized in that** the current cut-off means (12) series-connected with each capacitor (10) of the power reserve device (1') are fuses.

5. Device according to Claim 1, **characterized in that** the current cut-off means (12) series-connected with each capacitor (10) of the power reserve device (1') are circuit-breakers.

## Patentansprüche

1. Energiereservevorrichtung (1') von elektrischem Gleichstrom, die zwischen mindestens eine Gleichstromquelle (2, 3) und eine Last (4, 5) eingefügt und mit einem Satz von parallelgeschalteten Kondensatoren (10) versehen ist, **dadurch gekennzeichnet, dass** sie in Reihe an ihrem Eingang angeordnete Strombegrenzungsmittel (11) und Stromunterbrechungsmittel (12) aufweist, die in Reihe mit jedem Kondensator (10) angeordnet sind und sich bei einer Stromstärke öffnen, die höher ist als die Stärke des Nennlaststroms des geschützten Kondensators (10), welche durch die Verteilung des von der Gleichstromquelle (2, 3) bei jedem Einschalten gelieferten Stroms mit durch die Strombegrenzungsmittel (11) begrenzter Stärke auf die Kondensatoren (10) vorgegeben wird.

2. Vorrichtung nach Anspruch 1, **dadurch gekennzeichnet, dass** die in Reihe mit jedem Kondensator (10) der Energiereservevorrichtung (1') angeordneten Stromunterbrechungsmittel (12) je mit einer Schaltung zur Anzeige ihres offenen oder geschlossenen Zustands versehen sind.

3. Vorrichtung nach Anspruch 1, **dadurch gekennzeichnet, dass** sie außerdem Mittel zum Test der Stromstärke (13), die in Reihe mit jedem Kondensator (10) angeordnet sind, und Prüfmittel (7) aufweist, die sich vergewissern, dass die Testmittel (13) bei jedem Einschalten der Gleichstromquelle (2, 3) einen Strom erfassen.

4. Vorrichtung nach Anspruch 1, **dadurch gekennzeichnet, dass** die in Reihe mit jedem Kondensator (10) der Energiereservevorrichtung (1') angeordneten Stromunterbrechungsmittel (12) Sicherungen sind.

5. Vorrichtung nach Anspruch 1, **dadurch gekennzeichnet, dass** die in Reihe mit jedem Kondensator (10) der Energiereservevorrichtung (1') angeordneten Stromunterbrechungsmittel (12) Trennschalter sind.
